# EUROPEAN PATENT APPLICATION

(11) **EP 2 105 774 A1**
(43) Date of publication of application: **30.09.2009**
(21) Application number: 08016472.6
(22) Date of filing: 18.09.2008
(51) Int. Cl.: G02B 6/42

(54) **Optical communication device**

(30) Priority: 27.03.2008 JP 2008082649
(71) Applicant: Fuji Xerox Co., Ltd., Minato-ku, Tokyo (JP)
(72) Inventor: Kojima, Tomoaki, Ashigarakami-gun Kanagawa (JP); Sakai, Kazuhiro, Ashigarakami-gun Kanagawa (JP); Ueno, Osamu, Ashigarakami-gun Kanagawa (JP); Kyozuka, Shinya, Ashigarakami-gun Kanagawa (JP); Sakamoto, Akira, Ashigarakami-gun Kanagawa (JP)
(74) Representative: Klunker . Schmitt-Nilson . Hirsch

(57) **Abstract**

An optical communication device (10) has: an optical waveguide device (20) having an optical waveguide core (25) that guides light, a cladding portion (22) enveloping the optical waveguide core, a mirror surface (24) structured at an end surface of the cladding portion and the optical waveguide core, and changing an optical path of light that passes through the optical waveguide core, and an electrically-conductive film (27) formed so as to cover the mirror surface; a reference potential member (54) at which a predetermined potential is ensured; and a connecting member (55) electrically connecting the electrically-conductive film and the reference potential member.
Electrical crosstalk between active optical components (30,40) can thereby be suppressed.

## Description

### BACKGROUND

### Technical Field

The present invention relates to an optical communication device that is used in a mobile device or the like.

### Related Art

As the performances of electronic devices have improved in recent years, it has become difficult to accommodate data transmission speeds and a reduction in noise with conventional electrical wiring. Attention has focused on optical wiring between devices, and between boards and between chips within devices. In order to realize such optical wiring, surface emitting elements that are high speed and have excellent mass produceability, and VCSEL elements in particular, are used for interconnection applications and applications for optical communications. Such a light-emitting element is combined with an optical waveguide device and packaged. At the optical waveguide device, a mirror surface is formed in order to change the optical path within the optical waveguide, and there are cases in which the mirror surface is covered by an electrically-conductive film. When an electrically-conductive member that floats electrically is used in the vicinity of an active optical component in this way, due to the electrical coupling between the electrically-conductive portion and the active optical component, the noise on the electrically-conductive portion imparts noise to the active optical component, or electrical crosstalk, by which the electrical signals of an active optical component affect other active optical components, arises.

The techniques disclosed in, for example, Japanese Patent Applications Laid-Open (JP-A) Nos. 2003-232944, 2003-232967 and 2001-356228 are known as techniques for suppressing electrical and optical crosstalk in an optical communication device using an optical waveguide device. In JP-A Nos. 2003-232944 and 2003-232967, the light transmission path pitch is widened in order to make the distance between the elements greater. Further, in JP-A No. 2001-356228, partitions are disposed between elements so as to suppress electrical and optical crosstalk.

### SUMMARY

The present invention provides an optical communication device in which electrical noise and electrical crosstalk are suppressed.

An optical communication device of a first aspect of the present invention has: an optical waveguide device having an optical waveguide core that guides light, a cladding portion enveloping the optical waveguide core, a mirror surface structured at an end surface of the cladding portion and the optical waveguide core, and changing an optical path of light that passes through the optical waveguide core, and an electrically-conductive film formed so as to cover the mirror surface; a reference potential member at which a predetermined potential is ensured; and a connecting member electrically connecting the electrically-conductive film and the reference potential member.

In the optical communication device of the first aspect, the mirror surface is structured at the end portion of the cladding portion. The optical path of the light, that passes through the optical waveguide core, is changed at the mirror surface. Further, the mirror surface is covered by the electrically-conductive film. This electrically-conductive film is electrically connected to the reference potential member at which a predetermined potential is ensured. Therefore, the potential of the electrically-conductive film becomes a predetermined potential. Noise, that is imparted to an active optical component by the noise on an electrically-conductive portion due to the electrical coupling of the electrically-conductive portion and the active optical component, and electrical crosstalk between active optical components, by which electrical signals of an active optical component affect other active optical components, can be suppressed.

### BRIEF DESCRIPTION OF THE DRAWINGS

Exemplary embodiments of the present invention will be described in detail based on the following figures, wherein:
Fig. 1 is an exploded perspective view of an optical communication device relating to a first exemplary embodiment;
Fig. 2A is a top view of the optical communication device relating to the first exemplary embodiment;
Fig. 2B is a side view of the optical communication device relating to the first exemplary embodiment;
Fig. 3 A is a top view of a modified example of the optical communication device relating to the first exemplary embodiment;
Fig. 3B is a side view of the modified example of the optical communication device relating to the first exemplary embodiment;
Fig. 4 is a top view of another modified example of the optical communication device relating to the first exemplary embodiment;
Fig. 5 is a top view of another modified example of the optical communication device relating to the first exemplary embodiment;
Fig. 6 is a top view of another modified example of the optical communication device relating to the first exemplary embodiment;
Fig. 7 is a top view of another modified example of the optical communication device relating to the first exemplary embodiment;
Fig. 8A is a top view of another modified example of the optical communication device relating to the first exemplary embodiment;
Fig. 8B is a side view of the other modified example of the optical communication device relating to the first exemplary embodiment;
Fig. 9A is a top view of another modified example of the optical communication device relating to the first exemplary embodiment;
Fig. 9B is a side view of the other modified example of the optical communication device relating to the first exemplary embodiment;
Fig. 10A is a top view of another modified example of the optical communication device relating to the first exemplary embodiment;
Fig. 10B is a side view of the optical communication device relating to the first exemplary embodiment;
Fig. 11A is a top view of another modified example of the optical communication device relating to the first exemplary embodiment;
Fig. 11B is a side view of the other modified example of the optical communication device relating to the first exemplary embodiment;
Fig. 12A is a top view of another modified example of the optical communication device relating to the first exemplary embodiment;
Fig. 12B is a side view of the other modified example of the optical communication device relating to the first exemplary embodiment;
Fig. 13 is a side view of another modified example of the optical communication device relating to the first exemplary embodiment;
Fig. 14 is a top view of another modified example of the optical communication device relating to the first exemplary embodiment;
Fig. 15A and Fig. 15B are top views of other modified examples of the optical communication device relating to the first exemplary embodiment;
Fig. 16 is an exploded perspective view of a modified example of the optical communication device relating to the first exemplary embodiment;
Fig. 17A is a top view of the modified example of the optical communication device relating to the first exemplary embodiment;
Fig. 17B is a side view of the modified example of the optical communication device relating to the first exemplary embodiment;
Fig. 18 is a side view of a optical communication device relating to a second exemplary embodiment; and
Fig. 19 is a graph comparing the relationship between bit error rate and optical power, in a case in which an electrically-conductive film is grounded and in a case in which the electrically-conductive film is not grounded.

### DETAILED DESCRIPTION

### [First Exemplary Embodiment]

A first exemplary embodiment of the present invention will be described in detail hereinafter with reference to the drawings.

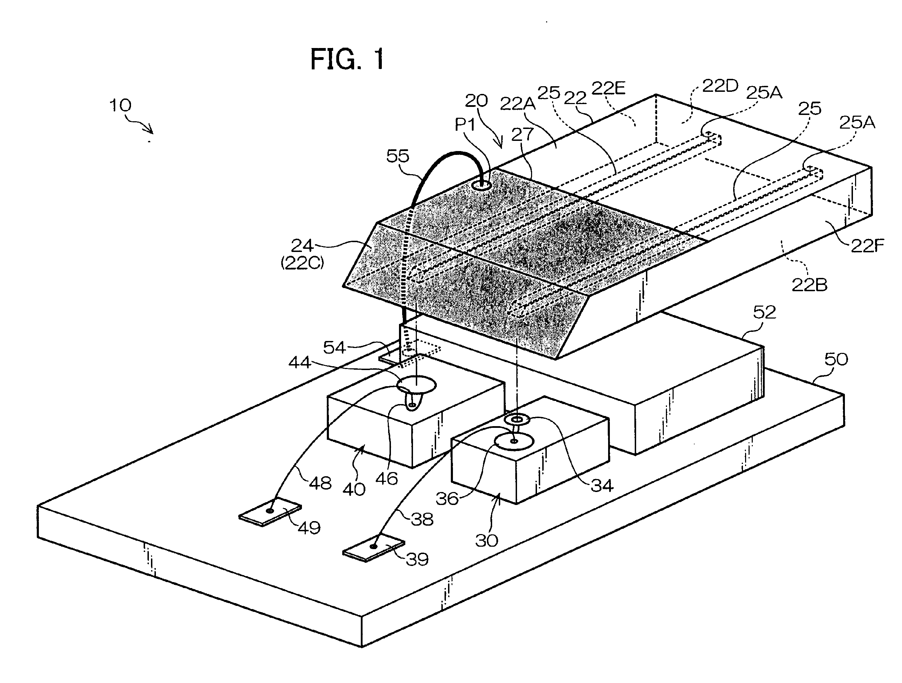

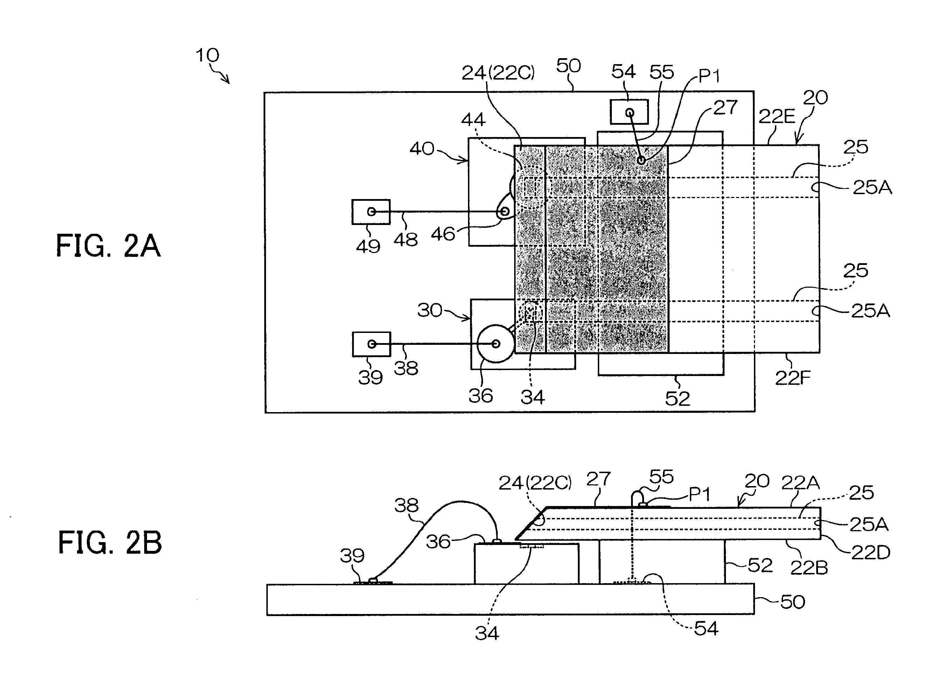

Schematic structural views of an optical waveguide device and an optical communication device relating to the present exemplary embodiment are shown in Fig. 1, Fig. 2A and Fig. 2B. An optical communication device 10 has an optical waveguide device 20, a light-emitting element 30, a light-receiving element 40, and a substrate 50.

The optical waveguide device 20 has a rectangular-plate-shaped cladding portion 22. The cladding portion 22 can be structured by an optically transmissive resin or the like. The present exemplary embodiment describes an example in which the cladding portion is shaped as a rectangular plate, but the cladding portion may be another shape.

The rectangular-plate-shaped cladding portion 22 has a top surface 22A and an incident/exiting surface 22B that face one another in the direction of thickness, one end surface 22C and another end surface 22D that face one another in the longitudinal direction, and side surfaces 22E, 22F that are disposed in the longitudinal direction. The one end surface 22C of the cladding portion 22 is a flush shape that is cut-off at an angle of 45° with respect to the incident/exiting surface 22B. Optical waveguide cores 25 are structured at the interior of the cladding portion 22. The optical waveguide cores 25 are formed of a material that has a higher refractive index than the cladding portion 22, and are optical paths.

Two of the optical waveguide cores 25 are disposed in the longitudinal direction of the cladding portion 22. The two optical waveguide cores 25 are disposed parallel to one another, and are formed from the one end surface 22C to the other end surface 22D. First input/output openings 25A of the optical waveguide cores 25 are structured at the other end surface 22D.

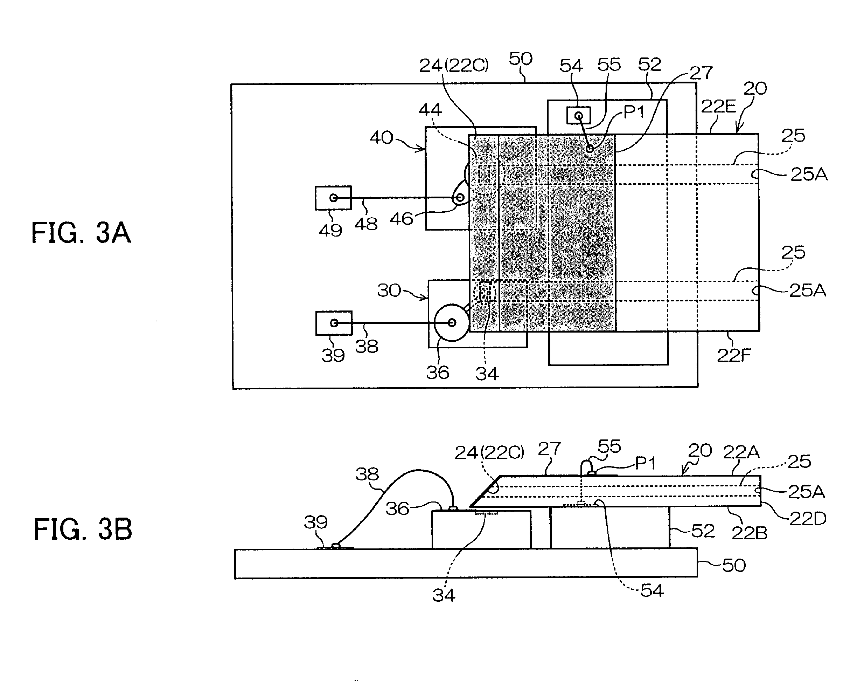

The one end surface 22C forms an angle of 45° with the incident/exiting surface 22B. As shown in Fig. 3B as well, a mirror surface 24, that changes by 90° the optical paths of the lights that are transmitted through the optical waveguide cores 25, is formed at the one end surface 22C. Namely, the optical paths of the lights from the optical waveguide cores 25, and the light that is incident from the incident/exiting surface 22B side, are changed at the mirror 24. Namely, the mirror surface 24 functions as an optical path changing surface that changes the optical paths of the lights. Note that the 45° angle here may deviate by, for example, about ±10% in light of mechanical precision. The mirror surface 24 may be formed by cutting by using a dicing saw or a laser, or may be formed by molding.

An electrically-conductive film 27 is formed at the mirror surface 24 (the one end surface 22C) and at the one end surface 22C side of the top surface 22A. For example, gold, silver, copper, alloys of any of these, or the like can be used as the electrically-conductive film 27, and the electrically-conductive film 27 is preferably a material having high light reflectance. The electrically-conductive film 27 can be formed by depositing a metal by vapor deposition, sputtering or the like.

The substrate 50 is rectangular-plate-shaped, and the light-emitting element 30, the light-receiving element 40 and a submount 52 are disposed on the top surface side thereof. Note that the submount 52 may be formed integrally with the substrate 50. Further, a package may be used instead of the substrate.

The light-emitting element 30 has a light-emitting portion 34 and an electrode pad 36. The light-emitting portion 34 and the electrode pad 36 are disposed on the top surface of the light-emitting element 30. In the present exemplary embodiment, a surface emitting laser (VCSEL: Vertical Cavity Surface Emitting Laser) is used as the light-emitting element 30. Note that the light-emitting element is not limited to a surface emitting laser, and an LED or another light-emitting element may be used.

The electrode pad 36 is electrically connected to the light-emitting element 30, and is connected, via a wire 38, to an electrode 39 on the substrate 50. Electrical signals are sent through the electrode 39, the wire 38 and the electrode pad 36 to the light-emitting element 30, and laser light is emitted from the light-emitting portion 34.

The light-receiving element 40 has a light-receiving portion 44 and an electrode pad 46. The light-receiving portion 44 and the electrode pad 46 are disposed on the top surface of the light-receiving element 40. In the present exemplary embodiment, a photodiode is used as the light-receiving element 40. Note that the light-receiving element is not limited to a photodiode, and another light-receiving element may be used.

The electrode pad 46 is electrically connected to the light-receiving element 40, and is connected, via a wire 48, to an electrode 49 on the substrate 50. The light received at the light-receiving portion 44 is converted into electrical signals, and the electrical signals are outputted through the electrode pad 46, the wire 48 and the electrode 49.

The submount 52 is rectangular-plate-shaped, and is made to be a thickness such that the submount 52 is slightly taller than the light-emitting element 30 and the light-receiving element 40. As shown in Fig. 2A and Fig. 2B, the submount 52 is disposed at the other end surface 22D side of the substrate 50, and the light-emitting element 30 and the light-receiving element 40 are disposed on the substrate 50. The optical waveguide device 20 is placed on the submount 52, and is disposed at a position at which the light from the light-emitting portion 34 is incident on the optical waveguide core 25 and the light from the optical waveguide core 25 is received at the light-receiving portion 44.

A reference potential pad 54 is provided on the substrate 50. The reference potential pad 54 is connected to an unillustrated grounding member and made to be GND potential. The reference potential pad 54 and the electrically-conductive film 27 are electrically connected by a connecting wire 55. Accordingly, the electrically-conductive film 27 is maintained at GND potential. The one end portion and the other end portion of the connecting wire are bonded to the reference potential pad 54 and the electrically-conductive film 27, respectively. A bonding position P1 of the electrically-conductive film 27 and the connecting wire 55 is formed at a portion of the top surface 22A that is disposed above the submount 52.

In the optical communication device 10 of the above-described structure, electrical signals are inputted to the light-emitting portion 34 via the electrode 39, the wire 38 and the electrode pad 36, and a light beam is outputted from the light-emitting portion 34. The outputted light beam is incident from the incident/exiting surface 22B. The light that is incident from the incident/exiting surface 22B is reflected at the mirror surface 24 such that the optical path thereof is changed, and passes through the interior of the optical waveguide core 25 and is led to the first input/output opening 25A side.

Further, light from an unillustrated exterior is incident in the optical waveguide core 25 from the other first input/output opening 25A side, and is reflected at the mirror surface 24 such that the optical path thereof is changed 90°, and exits from the incident/exiting surface 22B and is received at the light-receiving portion 44. The light received at the light-receiving portion 44 is converted into electrical signals, and the electrical signals are outputted through the electrode pad 46, the wire 48 and the electrode 49.

If the mirror surface 24 is covered by the electrically-conductive film 27 as in the present exemplary embodiment, the mirror surface 24 can be protected from condensation and dust. Further, if the mirror surface 24 is covered by the electrically-conductive film 27, there can be a structure in which the outer side of the optical waveguide device 20 is sealed by resin. By forming the electrically-conductive film 27 in this way, a film that is electrically conductive is disposed in a vicinity of the active optical components, and it becomes easy for noise to arise and it becomes easy for crosstalk via the electrically-conductive film to arise. However, in the present exemplary embodiment, because the electrically-conductive film 27 is made to be GND potential, such noise and crosstalk can be suppressed.

Note that, although the electrically-conductive film 27 is made to be GND potential in the present exemplary embodiment, the electrically-conductive film 27 does not necessarily have to be grounded provided that it is maintained at a constant potential. Accordingly, the reference potential pad 54 may be connected to another member that is maintained at a constant potential, rather than a grounding member.

Further, the present exemplary embodiment describes an example in which the reference potential pad 54 is provided on the substrate 50. However, as shown in Fig. 3A and Fig. 3B, the reference potential pad 54 that is maintained at a constant potential may be provided on the submount 52. Moreover, the submount 52 itself may be structured by an electrically-conductive member and made to be the reference potential, and by connecting the electrically-conductive film 27 thereto, the electrically-conductive film 27 may be made to be the reference potential.

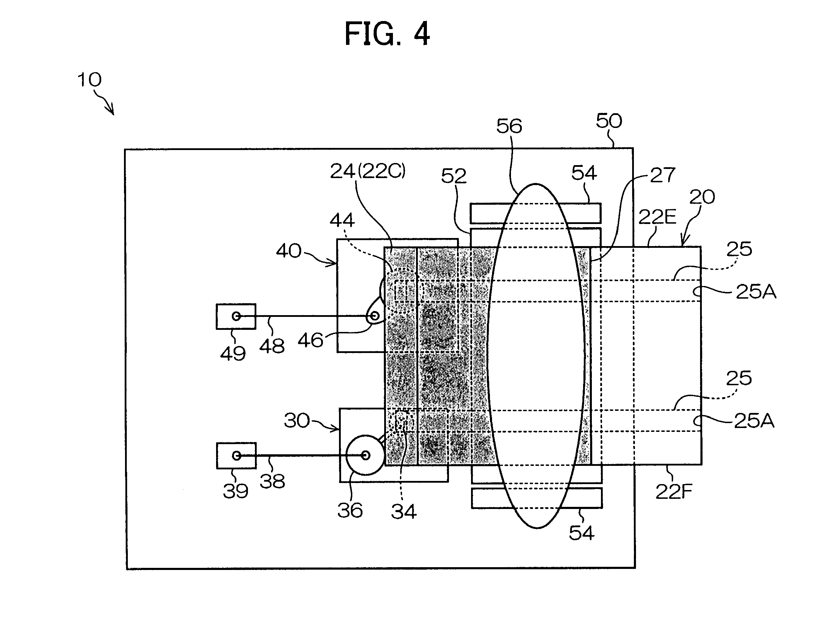

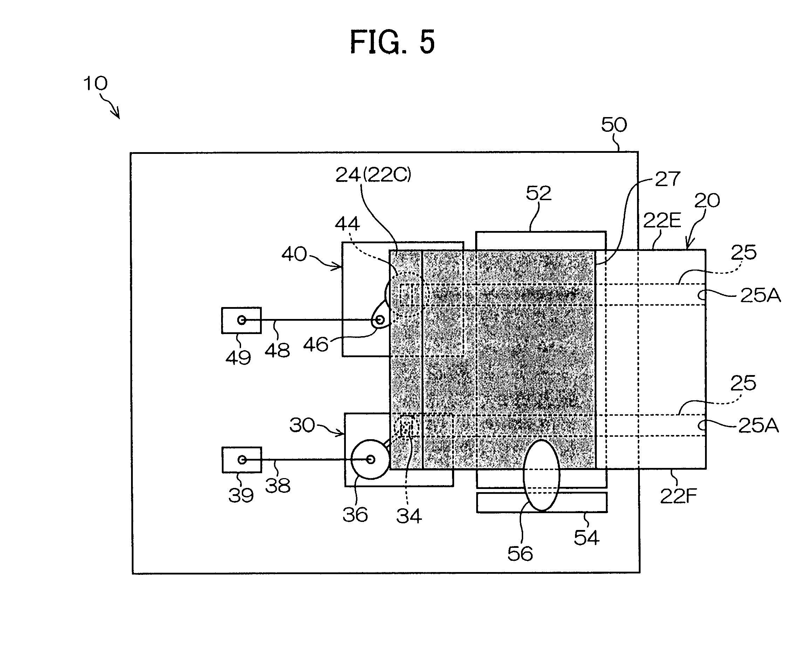

In the present exemplary embodiment, the electrically-conductive film 27 and the reference potential pad 54 are connected by the connecting wire 55. However, a connecting wire does not necessarily have to be used as the connecting member, and the connecting member may be structured by another electrically-conductive member, e.g., an electrically-conductive paste, an electrically-conductive film, an electrically-conductive tape, an electrically-conductive fastener, or the like. In this case, as shown in Fig. 4, the reference potential pads 54 on the substrate 50 may be provided at both sides of the submount 52 (at the outer sides of the side surfaces 22E, 22F respectively), and an electrically-conductive member 56 may be disposed so as to traverse the portion of the electrically-conductive film 27 from the one reference potential pad 54 to the other reference potential pad 54, and connect the electrically-conductive film 27 and the reference potential pads 54. Note that, as shown in Fig. 5, there may be a structure in which the reference potential pad 54 is provided at only one side of the submount 52 (at the outer side of either one of the side surfaces 22E, 22F, and at the side surface 22F side in Fig. 5), and the electrically-conductive film 27 and the reference potential pad 54 may be connected by the electrically-conductive member 56.

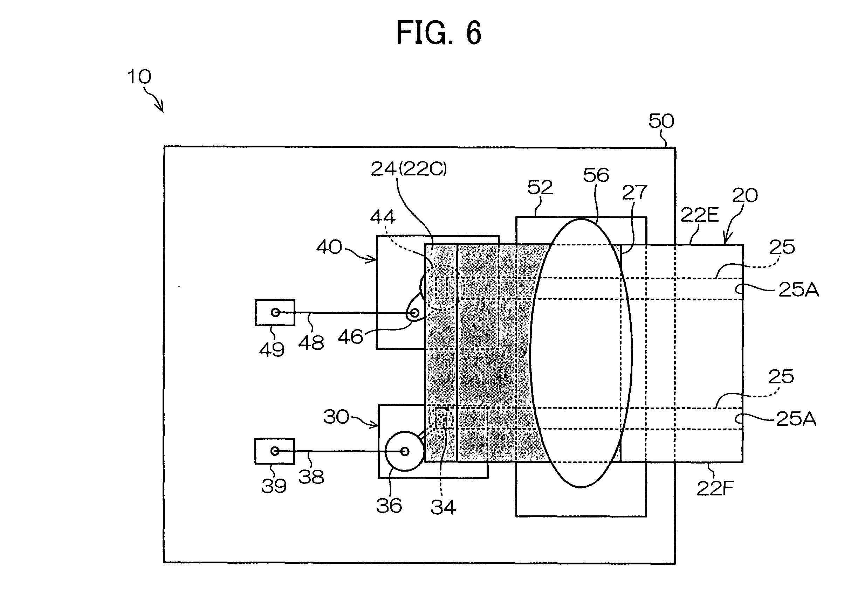

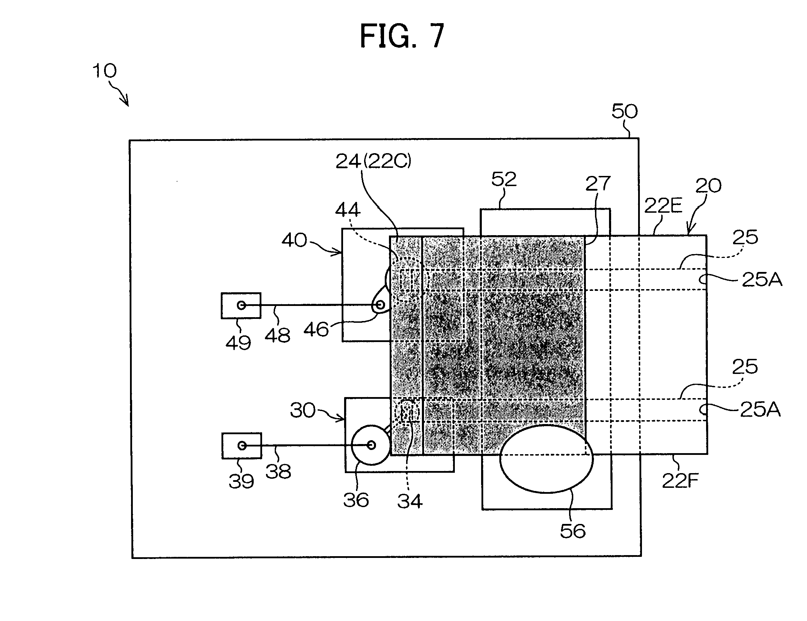

Further, in a case in which the submount 52 is structured by an electrically-conductive member and is made to be the reference potential, as shown in Fig. 6, the electrically-conductive member 56 may be disposed so as to cross from the side surface 22E to the side surface 22F of the optical waveguide device 20, and connect the submount 52 and the electrically-conductive film 27. Or, as shown in Fig. 7, there may be a structure in which the electrically-conductive member 56 connects the submount 52 and the electrically-conductive film 27 at only one side of the optical waveguide device 20 (at the outer side of either one of the side surfaces 22E, 22F, and at the side surface 22F side in Fig. 7 ).

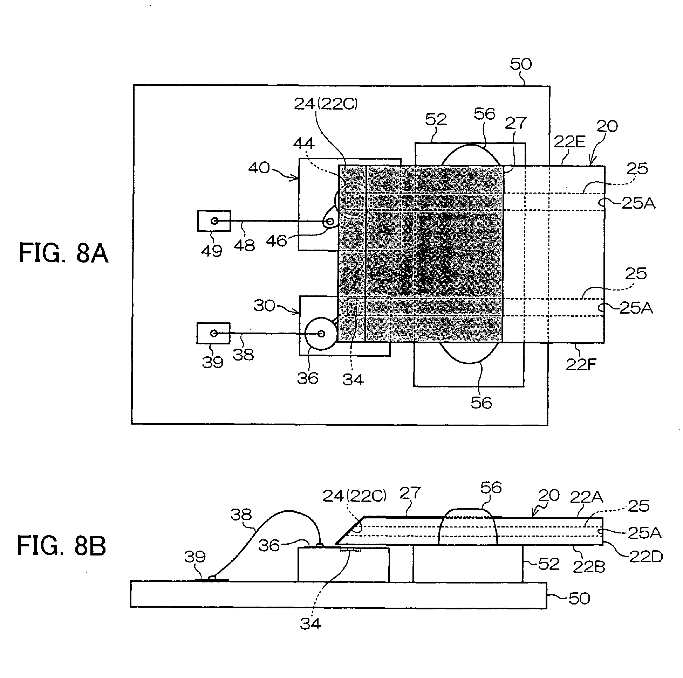

Further, in a case in which the submount 52 is structured by an electrically-conductive member and is made to be the reference potential, the structure may be as follows. As shown in Fig. 8A, the electrically-conductive member 56 is disposed directly on the submount 52. The optical waveguide device 20 is placed on the electrically-conductive member 56. The portions of the electrically-conductive member 56 that project-out from the outer sides of the side surfaces 22E, 22F are, as shown in Fig. 8B, made to climb-up to a position reaching the top surface 22A. The electrically-conductive member 56 is made to contact the electrically-conductive film 27, and connects the electrically-conductive film 27 and the submount 52.

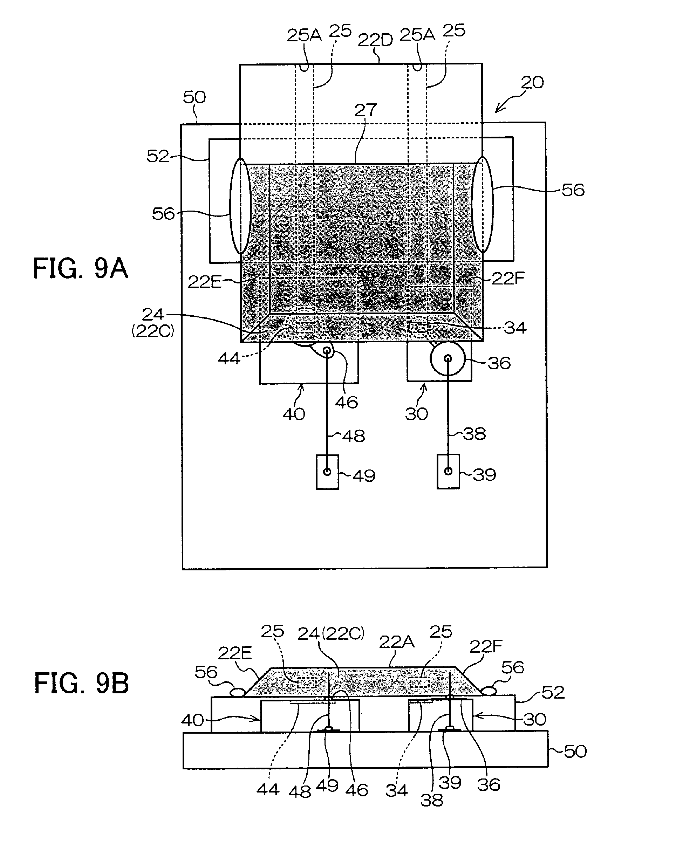

Further, as shown in Fig. 9A and Fig. 9B, the side surfaces 22E, 22F of the optical waveguide device 20 may be made to be inclined surfaces that are cut or molded in chamfered shapes, and the electrically-conductive film 27 may be formed at the side surfaces 22E, 22F as well. In this case, by placing the optical waveguide device 20 on the submount 52, the electrically-conductive film 27 at the chamfer-shaped portions is a height that is adjacent to the top surface of the submount 52. Therefore, the submount 52, that is structured by an electrically-conductive member, and the electrically-conductive film 27 can be connected easily by an electrically-conductive paste or the like, without making the above-described electrically-conductive member 56 climb-up to the top surface 22A.

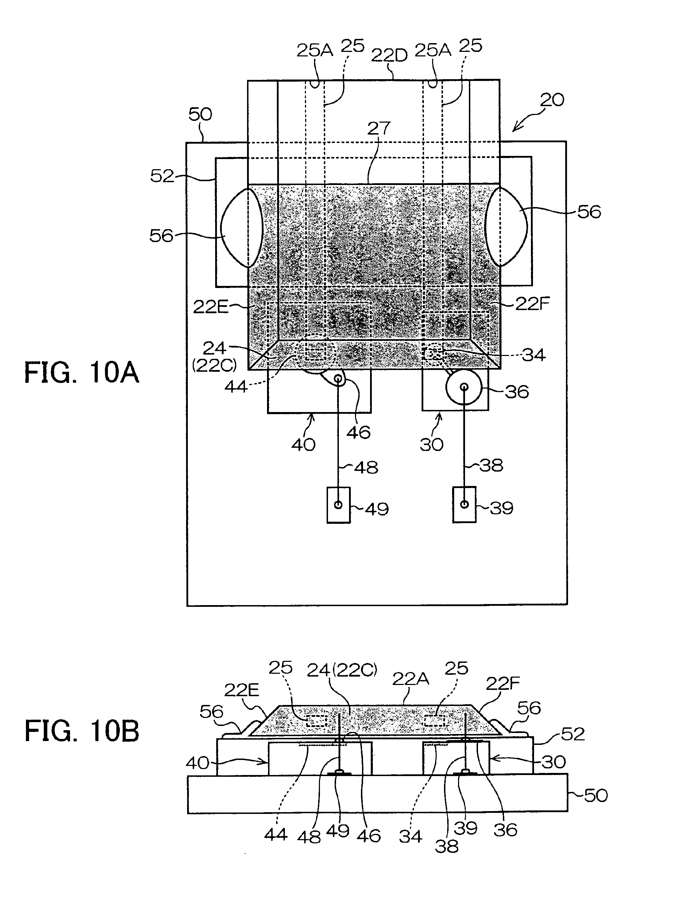

In a case in which the side surfaces 22E, 22F of the optical waveguide device 20 are made to be inclined surfaces that are cut or molded in chamfered shapes, if the submount 52 is structured by an electrically-conductive member and made to be the reference potential, as shown in Fig. 10A and Fig. 10B, the electrically-conductive member 56 may be disposed on the submount 52, the optical waveguide device 20 may be disposed thereon, and the portions of the electrically-conductive member 56 that project-out from the outer sides of the side surfaces 22E, 22F may be made to contact the side surfaces 22E, 22F, and connect the electrically-conductive film 27 and the submount 52.

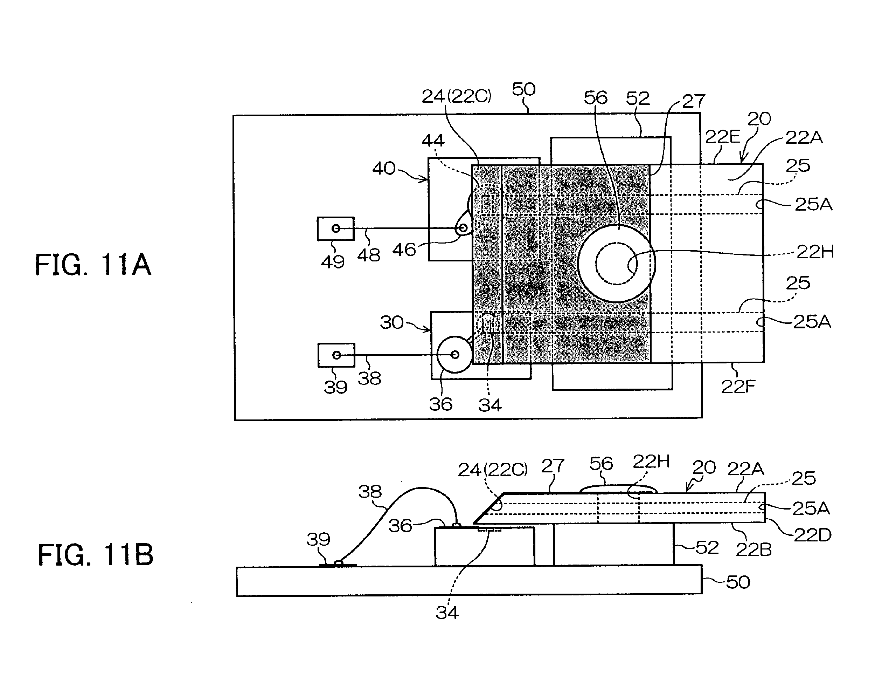

Further, as shown in Fig. 11 A and Fig. 11 B, at the portion of the top surface 22A where the electrically-conductive film 27 is formed, a pass-through hole 22H, that passes in the direction of thickness through a portion of the cladding portion 22 where the optical waveguide cores 25 are not formed, may be formed, and electrically-conductive paste may be filled into this pass-through hole 22H so as to connect the electrically-conductive film 27 and the submount 52 that is made to be the reference potential.

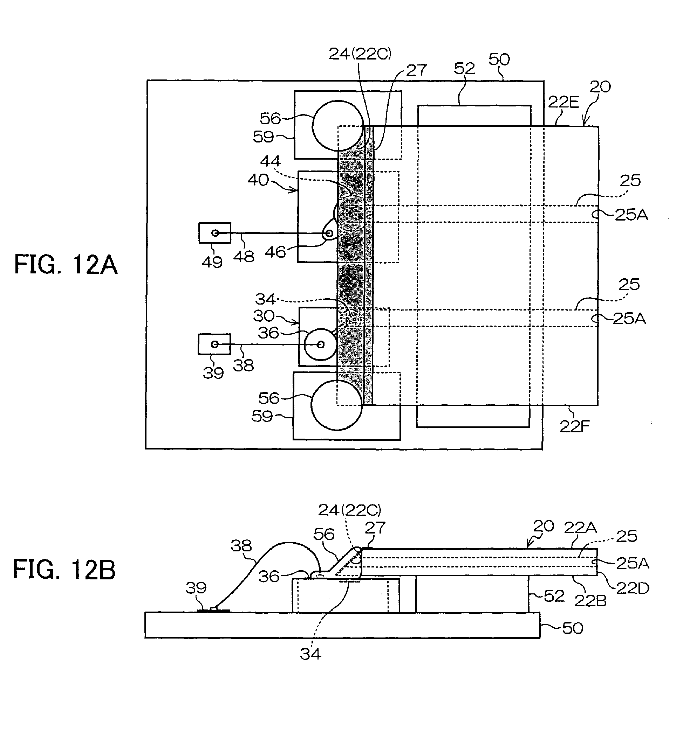

Moreover, as shown in Fig. 12A and Fig. 12B, the electrically-conductive film 27, that is formed on the one end surface 22C, and the reference potential portion may be connected. In this case, reference potential stands 59, at which the reference potential is ensured respectively, may be provided at the outer side of the light-emitting element 30 and the outer side of the light-receiving element 40, and the optical waveguide device 20 may be placed on the reference potential stands 59, and the electrically-conductive film 27 and the reference potential stands 59 may be connected by the electrically-conductive members 56.

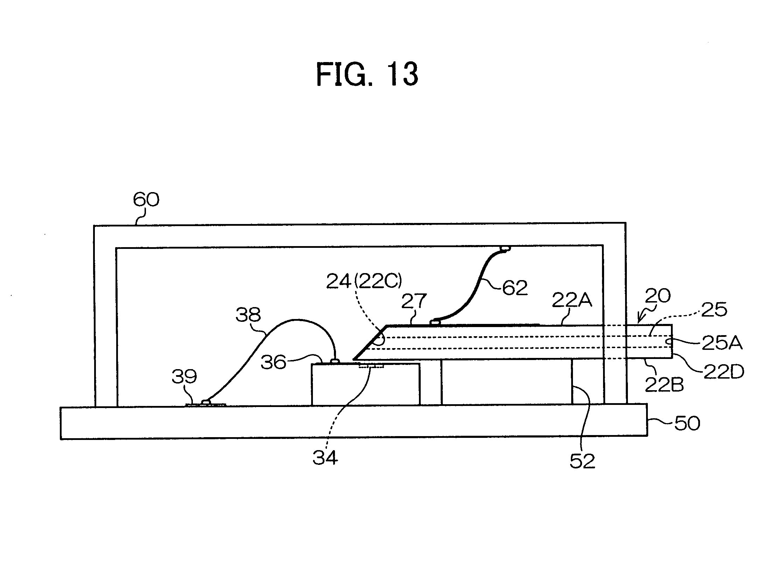

Still further, as shown in Fig. 13, a cover 60, that seals the light path changing portion side (the mirror surface 24 side) of the optical waveguide device 20 may be provided on the substrate 50. Instead of the reference potential pad 54, at least a portion of the cover 60 may be made to be an electrically-conductive member and made to be a predetermined potential. The electrically-conductive portion of the cover 60 and the top surface 22A side portion of the electrically-conductive film 27 may be connected by an electrically-conductive plate 62 or the like.

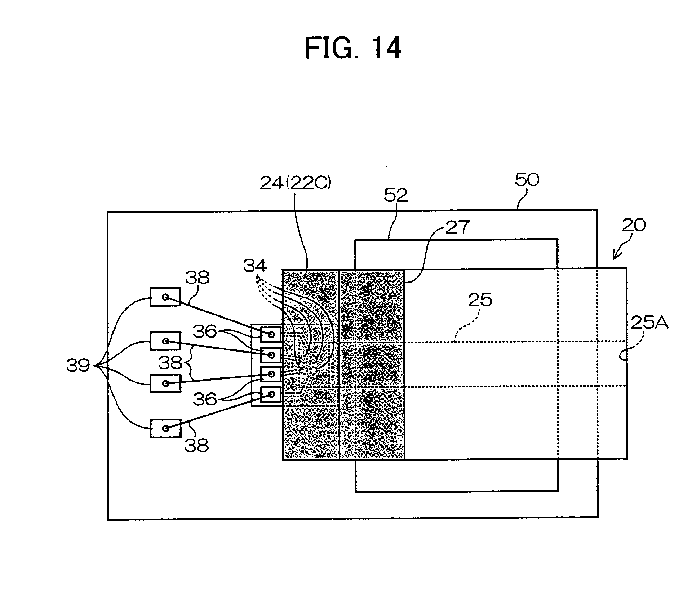

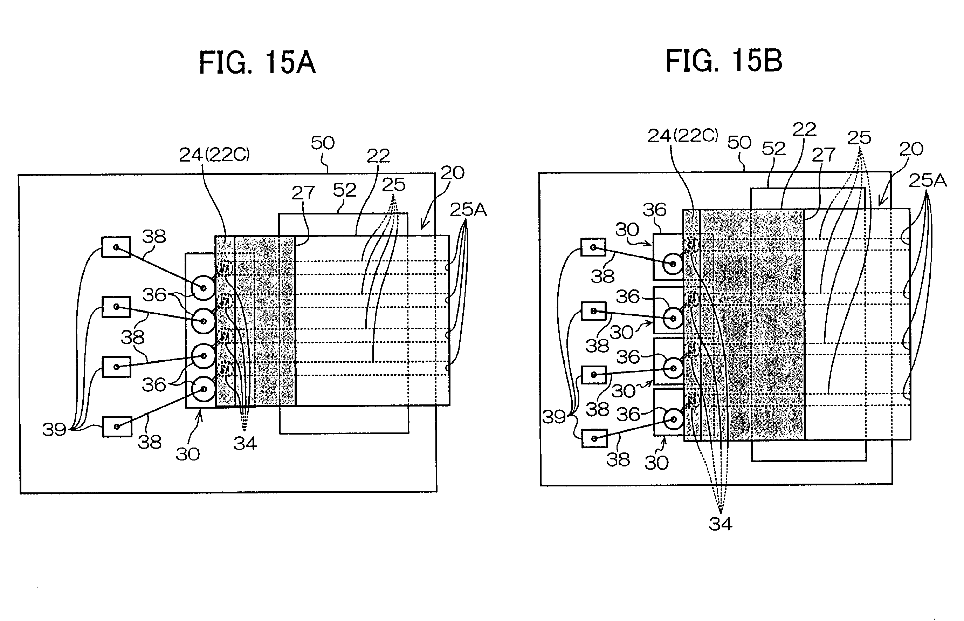

Further, the present exemplary embodiment describes an example in which two optical waveguide cores are structured in parallel as the optical waveguide device. However, there may be one optical waveguide core as shown in Fig. 14, or there may be three or more optical waveguide cores as shown in Fig. 15A and Fig. 15B.

Namely, as shown in Fig. 14, there may be plural (a large number) of light-emitting elements that emit light beams to the one optical waveguide core 25, and the respective light-emitting portions may be disposed at positions corresponding to the optical waveguide core 25.

Further, as shown in Fig. 15A, the plural light-emitting portions 34 (or light-receiving portions 44) may be arrayed on the one light-emitting element 30, and the respective light-emitting portions 34 (light-receiving portions 44) and the respective optical waveguide cores 25 may be disposed in correspondence with one another. Or the combinations of the light-emitting portion 34 and light-receiving portion 44 may be arrayed on the one light-emitting element 30, and the respective combinations and the respective optical waveguide cores 25 may be disposed in correspondence with one another. Or, as shown in Fig. 15B, light-emitting portions 34 (light-receiving portions 44), that are provided respectively at plural light-emitting elements 30, and the optical waveguide cores 25 may be disposed at corresponding positions. Or the combinations of the light-emitting portion 34 and light-receiving portion 44 that are provided respectively at plural light-emitting elements 30 and the optical waveguide cores 25 may be disposed at corresponding positions.

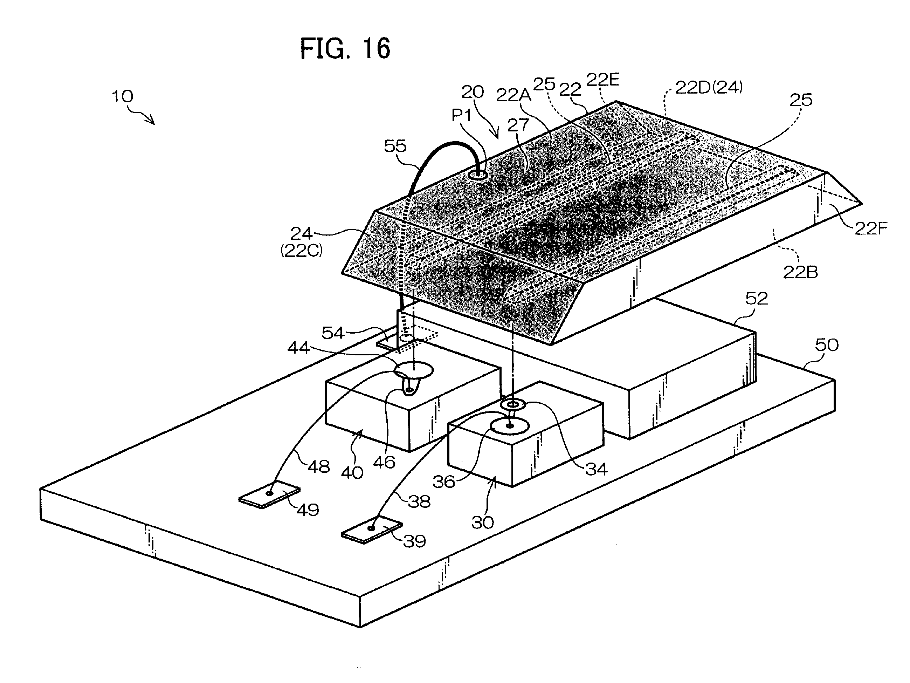

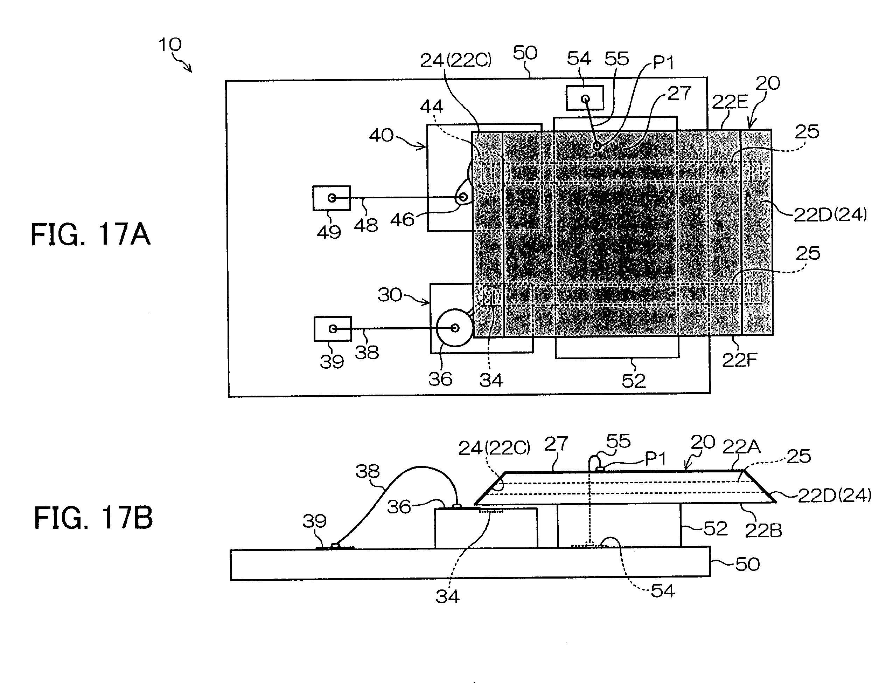

The present exemplary embodiment describes an example in which the mirror surface 24 is at an angle of 45° and the optical path is changed by 90°. However, the mirror surface may be structured at another angle, and the optical path may be changed by another angle.
Further, it suffices to not dispose the plural waveguide cores parallel to one another. Moreover, the present exemplary embodiment describes a structure in which light is incident and exits from the other end surface 22D structured at the end of the cladding portion 22 and the ends of the optical waveguide cores 25. However, as shown in Fig. 16 and Figs. 17A and 17B, at the other end surface 22D as well, an angle of 45° may be formed with the incident/exiting surface 22B so as to structure a mirror surface 24, and changing of the optical path may be carried out at the mirror surface 24 and the light made to be incident and made to exit from the incident/exiting surface 22B. Further, at this time, a light-emitting element, that causes light to be incident on the incident/exiting surface 22B, and a light-receiving element, that receives the light exiting from the incident/exiting surface 22B, may be provided.

The present exemplary embodiment describes an example in which the electrode pad of the light-emitting element and the electrode pad of the light-receiving element are connected to electrodes on the substrate. However, the electrode pad of the light-emitting element and the electrode pad of the light-receiving element may be connected to the pads of an IC such as a driver IC or an amp IC or the like, rather than electrodes on the substrate.

The present invention can also be applied to optical fiber boards or photoelectric fusion substrates having an optical path changing section.

### [Second Exemplary Embodiment]

A second exemplary embodiment will be described next. Portions of the second exemplary embodiment that are the same as those of the first exemplary embodiment are denoted by the same reference numerals, and detailed description thereof is omitted.

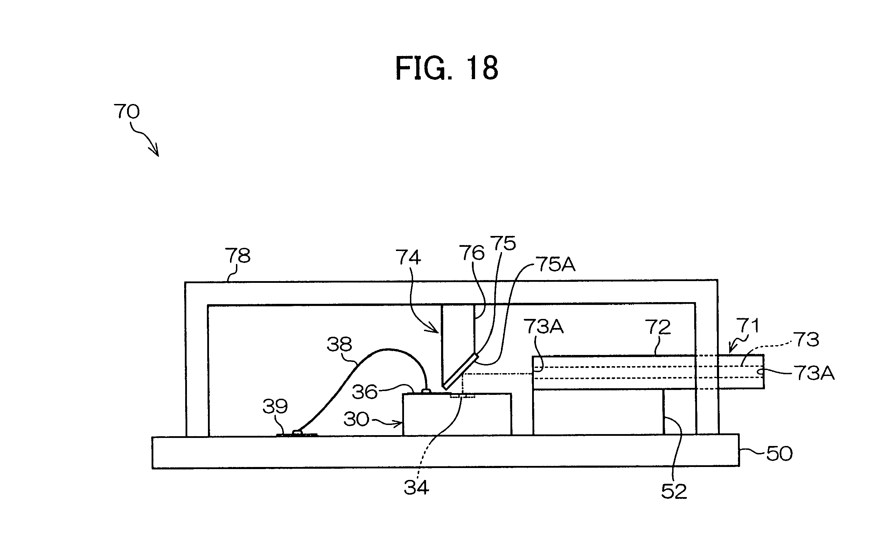

As shown in Fig. 18, an optical communication device 70 relating to the present exemplary embodiment has an optical waveguide device 71, an optical path changing section 74, a cover 78, the light-emitting laser portion 30, the light-receiving portion 40 and the substrate 50. The light-emitting laser portion 30, the light-receiving portion 40 and the substrate 50 are structured in the same way as in the first exemplary embodiment.

The optical waveguide device 71 has a rectangular-plate-shaped cladding portion 72. The cladding portion 72 is the portion forming the main body of the optical waveguide device 70, and can be structured by an optically transmissive resin film or the like. Optical waveguide cores 73 are formed within the cladding portion 72. The optical waveguide cores 73 are formed of a material having a high refractive index, and are optical paths. Two of the optical waveguide cores 73 are disposed in the longitudinal direction of the cladding portion 72. These two optical waveguide cores 73 are disposed parallel to one another. Input/output openings 73A of the optical waveguide cores 73 are formed at the both end surfaces in the longitudinal direction of the cladding portion 72 and the optical waveguide cores 73.

A mirror member 75 is provided at the intersection of imaginary extensions of the optical waveguide cores 73 and the optical axes of the light-emitting element 30 and the light-receiving element 40. The mirror member 75 is structured by an electrically-conductive member. A mirror surface 75A is formed at the surface at an angle that changes by 90° the optical paths of the optical waveguide cores 73 and the optical paths of the light-emitting element 30 and the light-receiving element 40. At least a portion of the mirror member 75 is mounted to a connecting member 76 that is electrically-conductive, such that the mirror member 75 is connected to the cover 78 by the connecting member 76. The mirror member 75 is connected to an electrically-conductive portion of the connecting member 76. The changing section 74 is structured by the mirror member 75 and the connecting member 76.

The cover 78 is disposed on the substrate 50. The optical waveguide device 71, the changing section 74, the light-emitting element 30 and the light-receiving element 40 are accommodated at the inner side of the cover 78. At least a portion of the cover 78 is electrically-conductive, and at least a portion thereof is grounded. The electrically-conductive portion of the connecting member 76 is connected to the electrically-conductive portion of the cover 78. Accordingly, the mirror member 75 is GND potential.

At the optical communication device 70 of the above-described structure, electrical signals are inputted to the light-emitting element 30 via the electrode 39, the wire 38 and the electrode pad 36, and a light beam is outputted from the light-emitting element 30. The optical path of the outputted light beam is changed by 90° at the mirror surface 75A, and the light beam is made incident on the optical waveguide core 73. Further, light from an unillustrated exterior is incident on the optical waveguide core 73, and the optical path thereof is changed by 90° at the mirror surface 75A, and the light is received at the light-receiving element 44. The light that is received at the light-receiving element 44 is converted into electrical signals, and the electrical signals are outputted via the electrode pad 46, the wire 48 and the electrode 49.

Also in a case in which the mirror member 75 that structures the mirror surface 75A is formed by an electrically-conductive member as in the present exemplary embodiment, the mirror member 75 is made to be GND potential, and therefore, noise and crosstalk can be suppressed.

An optical communication device of a first aspect of the present invention has: an optical waveguide device having an optical waveguide core that guides light, a cladding portion enveloping the optical waveguide core, a mirror surface structured at an end surface of the cladding portion and the optical waveguide core, and changing an optical path of light that passes through the optical waveguide core, and an electrically-conductive film formed so as to cover the mirror surface; a reference potential member at which a predetermined potential is ensured; and a connecting member electrically connecting the electrically-conductive film and the reference potential member.

In the optical communication device of the first aspect, the mirror surface is structured at the end portion of the cladding portion. The optical path of the light, that passes through the optical waveguide core, is changed at the mirror surface. Further, the mirror surface is covered by the electrically-conductive film. This electrically-conductive film is electrically connected to the reference potential member at which a predetermined potential is ensured. Therefore, the potential of the electrically-conductive film becomes a predetermined potential. Noise, that is imparted to an active optical component by the noise on an electrically-conductive portion due to the electrical coupling of the electrically-conductive portion and the active optical component, and electrical crosstalk between active optical components, by which electrical signals of an active optical component affect other active optical components, can be suppressed.

An optical communication device of a second aspect of the present invention has: a first optical path that guides light; an optical path changing member that is electrically conductive, and that changes an optical path of a light beam incident on the first optical path or a light beam from the first optical path; a reference potential member at which a predetermined potential is ensured; and a connecting member electrically connecting the optical path changing member and the reference potential member.

In the optical communication device of the present aspect, the optical path of the light beam is changed by the optical path changing member that is electrically-conductive. The electrically-conductive optical path changing member is electrically connected to the reference potential member at which a predetermined potential is ensured. Therefore, the potential of the optical path changing member becomes a predetermined potential, and the potential of the electrically-conductive film becomes a predetermined potential. Noise, that is imparted to an active optical component by the noise on an electrically-conductive portion due to the electrical coupling of the electrically-conductive portion and the active optical component, and electrical crosstalk between active optical components, by which electrical signals of an active optical component affect other active optical components, are suppressed.

In accordance with the present invention, electrical crosstalk and electrical noise, that are caused by the portion where the optical path is changed being electrically-conductive, can be suppressed.

### [Examples]

In the optical communication device of the structure shown in Fig. 1 of the first exemplary embodiment, the optical waveguide device 20, the light-emitting element 30 and the light-receiving element 40 that are disposed on the substrate 50 are sealed by resin, and the interval between the two optical waveguide cores 25 is made to be 1 mm. By using this optical communication device, the relationship between the optical power and the bit error rate (BER) is measured, in a case in which the electrically-conductive film 27 is grounded and in a case in which it is not grounded.

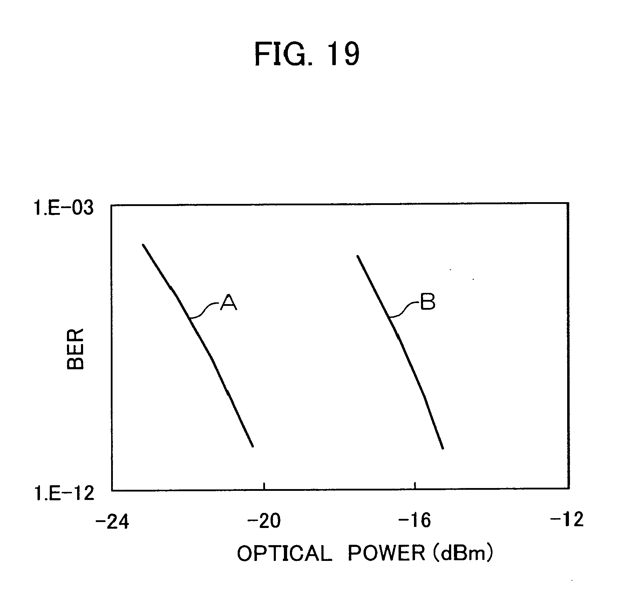

In the graph of Fig. 19, A is the case in which the electrically-conductive film 27 is grounded, and B is the case in which it is not grounded. As is clear from this graph, in the case in which the electrically-conductive film 27 is grounded, even if the optical power is small, the bit error rate is small, and good signals can be obtained.

## Claims

1. An optical communication device comprising:
an optical waveguide device having
an optical waveguide core that guides light,
a cladding portion enveloping the optical waveguide core,
a mirror surface structured at an end surface of the cladding portion and the optical waveguide core, and changing an optical path of light that passes through the optical waveguide core, and
an electrically-conductive film formed so as to cover the mirror surface;
a reference potential member at which a predetermined potential is ensured; and
a connecting member electrically connecting the electrically-conductive film and the reference potential member.

2. The optical communication device of claim 1, further comprising a substrate on which the optical waveguide device is outfitted,
wherein the reference potential member is disposed on the substrate, and the connecting member is structured so as to include an electrically-conductive substance that is disposed so as to contact both the electrically-conductive film and the reference potential member.

3. The optical communication device of claim 2, wherein the reference potential member is structured on a mounting member that is disposed on the substrate and on whose upper portion the optical waveguide device is outfitted.

4. The optical communication device of claim 1, wherein the electrically-conductive film extends from the mirror surface and is formed to a portion of a top surface of the cladding portion and the optical waveguide core which top surface is connected to the end surface.

5. The optical communication device of claim 2, wherein the electrically-conductive film extends from the mirror surface and is formed to a portion of a top surface of the cladding portion and the optical waveguide core which top surface is connected to the end surface.

6. The optical communication device of claim 3, wherein the electrically-conductive film extends from the mirror surface and is formed to a portion of a top surface of the cladding portion and the optical waveguide core which top surface is connected to the end surface.

7. An optical communication device comprising:
a first optical path that guides light;
an optical path changing member that is electrically conductive, and that changes an optical path of a light beam incident on the first optical path or a light beam from the first optical path;
a reference potential member at which a predetermined potential is ensured; and
a connecting member electrically connecting the optical path changing member and the reference potential member.
